# EUROPEAN PATENT APPLICATION

(11) **EP 1 921 792 A1**
(43) Date of publication of application: **14.05.2008**
(21) Application number: 06782677.6
(22) Date of filing: 04.08.2006
(51) Int. Cl.: H04L 9/08

(54) **COMMUNICATION SYSTEM, KEY MANAGEMENT/DELIVERY SERVER, TERMINAL APPARATUS, DATA COMMUNICATION METHOD USED FOR THEM, AND PROGRAM THEREOF**

(30) Priority: 05.08.2005 JP 2005227592
(71) Applicant: NEC Corporation, Minato-ku Tokyo 108-8001 (JP)
(72) Inventor: SAKAGUCHI, Yasuhiko, Tokyo 108-8001 (JP); MISU, Toshiyuki, Tokyo 108-8001 (JP); TOMIYAMA, Takuji, Tokyo 108-8001 (JP); FUJITA, Naotake, Tokyo 108-8001 (JP)
(74) Representative: Betten & Resch
(86) International application number: PCT/JP2006/315891
(87) International publication number: WO 2007/018277

(57) **Abstract**

To provide a mobile communication system that can prevent unauthorized use of an encryption key otherwise caused by loss thereof and that can securely perform a direct communication between terminals using the encryption key. A portable terminal apparatus 1-1 transmits a P2P communication trigger to a portable terminal apparatus 1-n through a key managing/distributing server 3. In response to the transmission/reception of the trigger, the portable terminal apparatuses 1-1 and 1-n establish IPsec data sessions with the key managing/distributing server 3 through a SIP server 2 and a secret key is distributed per communication to the portable terminal apparatuses 1-1 and 1-n from the key managing/distributing server 3. The portable terminal apparatuses 1-1 and 1-n establish an IPsec data session therebetween using the secret key, thereby performing a P2P communication. The key managing/distributing server 3 performs key delivery control for switching to the session and establishing the session, with respect to the portable terminal apparatuses 1-1 and 1-n.

## Description

### Technical Field

This invention relates to a communication system, a key managing/distributing server, a terminal apparatus, a data communication method used therefor, and a program thereof and, in particular, relates to a method of performing a data communication by securely obtaining a dynamically generated encryption key.

### Background Art

In recent years, for portable terminal apparatuses such as portable telephones, following the increasing multifunctionality thereof, a method has been proposed that directly connects between portable terminal apparatuses by short-range wireless communication or the like to perform a data communication therebetween, in addition to wireless communication through a wireless base station. Such a conventional technique is described, for example, in Unexamined Patent Publication No. 2003-087267.

In that event, in the case of connecting the portable terminals by P2P (Peer to Peer : direct communication between terminals) communication (including P2P by short-range wireless communication or the like) as described above, if the communication is performed using a secret key possessed by the portable terminal apparatus, it is necessary to publish the secret key of its own to the portable terminal apparatus of the communication partner or to use a public key cryptosystem. Note, however, that the P2P communication by the short-range wireless communication cannot be realized when the terminal apparatuses are remote from each other.

In the foregoing conventional data communication method, there is a problem that publishing one's own secret key results in that the secret key is possessed by a plurality of persons and, therefore, there is a possibility of unauthorized use thereof. Further, when the public key cryptosystem is used, complicated encryption and decryption processes are required, which is thus not suitable for processing in a small-scale terminal such as a portable terminal apparatus.

Further, having a plurality of secret keys for respective communication partners extensively uses a storage area of a memory of a portable terminal apparatus storing those secret keys and, if any of the communication partners loses one's own portable terminal apparatus, the plurality of secret keys stored in its memory leak out, which raises a big problem.

On the other hand, in the conventional data communication method, there is also a method of performing key delivery using HTTP (HTTPS) [Hyper Text Transfer Protocol (Hyper Text Transfer Protocol over transport layer security/secure sockets layer)]. However, this method lacks the real-time performance and, further, the same key should be delivered also to a communication partner with a trigger when a sender wishes to start a communication, According to the nature of HTTP (HTTPS), however, it is difficult to trigger key delivery from a key managing/delivering server side to a terminal apparatus (HTTP client).

Therefore, it is an object of this invention to solve the foregoing problems and to provide a communication system that can prevent unauthorized use of an encryption key otherwise caused by loss thereof and that can securely perform a direct communication between terminals using the encryption key, a key managing/distributing server, a terminal apparatus, a data communication method used therefor, and a program thereof.

### Disclosure of the Invention

A communication system according to this invention is a communication system enabling a peer-to-peer data communication to be performed between a first and a second terminal apparatus based on an encryption key shared by the first terminal apparatus and the second terminal apparatus,
wherein one of the first terminal apparatus and the second terminal apparatus notifies a trigger of start of the peer-to-peer data communication to the other of the first terminal apparatus and the second terminal apparatus through a communication channel by a first communication method, and
the first terminal apparatus and the second terminal apparatus, in response to transmission and reception of the trigger of start of the data communication, each form a communication channel by a second communication method between itself and a relay server that relays the encryption key and each perform switching from the communication channel by the first communication method to the communication channel by the second communication method, whereby sharing the encryption key between the first terminal apparatus and the second terminal apparatus through the relay server.

Another communication system according to this invention is a communication system enabling a peer-to-peer data communication to be performed between a first and a second terminal apparatus based on an encryption key distributed to the first terminal apparatus and the second terminal apparatus from a key managing/distributing server,
wherein one of the first terminal apparatus and the second terminal apparatus notifies a trigger of start of the peer-to-peer data communication to the other of the first terminal apparatus and the second terminal apparatus through the key managing/distributing server and through a communication channel by a first communication method, and
the first terminal apparatus and the second terminal apparatus, in response to transmission and reception of the trigger of start of the data communication, each form a communication channel by a second communication method between itself and the key managing/distributing server and each perform switching from the communication channel by the first communication method to the communication channel by the second communication method, whereby distributing the encryption key to the first terminal apparatus and the second terminal apparatus from the key managing/distributing server, respectively.

A key managing/distributing server according to this invention is a key managing/distributing server adapted to distribute an encryption key to a first and a second terminal apparatus, respectively, in a communication system enabling a peer-to-peer data communication between the first terminal apparatus and the second terminal apparatus, and comprises
means, responsive to receipt of a trigger of start of the peer-to-peer data communication, transmitted from one of the first terminal apparatus and the second terminal apparatus, through a communication channel by a first communication method, for transferring the trigger of start of the data communication to the other of the first terminal apparatus and the second terminal apparatus, and means for distributing the encryption key through communication channels by a second communication method switched and formed by the first terminal apparatus and the second terminal apparatus between themselves and the key managing/distributing server, respectively, in response to transmission and reception of the trigger of start of the peer-to-peer data communication.

A terminal apparatus according to this invention is a terminal apparatus adapted to perform a peer-to-peer data communication between itself and another terminal apparatus based on an encryption key shared by itself and the another terminal apparatus,
wherein the terminal apparatus transmits a trigger of start of the peer-to-peer data communication to the another terminal apparatus through a relay server that relays the encryption key and through a communication channel by a first communication method, forms a communication channel by a second communication method between itself and the relay server in response to either of transmission of the trigger of start of the peer-to-peer data communication from itself and reception of the trigger of start of the peer-to-peer data communication from the another terminal apparatus, and performs switching from the communication channel by the first communication method to the communication channel by the second communication method, whereby performing either of transmission and reception of the encryption key through the relay server.

Another terminal apparatus according to this invention is a terminal apparatus adapted to perform a peer-to-peer data communication between itself and another terminal apparatus based on an encryption key distributed to itself and the another terminal apparatus from a key managing/distributing server,
wherein the terminal apparatus transmits a trigger of start of the peer-to-peer data communication to the another terminal apparatus through the key managing/distributing server and through a communication channel by a first communication method, forms a communication channel by a second communication method between itself and the key managing/distributing server in response to either of transmission of the trigger of start of the peer-to-peer data communication from itself and reception of the trigger of start of the peer-to-peer data communication from the another terminal apparatus, and performs switching from the communication channel by the first communication method to the communication channel by the second communication method, whereby receiving the encryption key from the key managing/distributing server.

A data communication method according to this invention is a data communication method for use in a system enabling a peer-to-peer data communication to be performed between a terminal apparatus and another terminal apparatus based on an encryption key shared by the terminal apparatus and the another terminal apparatus,
wherein the terminal apparatus performs a step of transmitting a trigger of start of the peer-to-peer data communication to the another terminal apparatus through a relay server that relays the encryption key and through a communication channel by a first communication method, and a step of forming a communication channel by a second communication method between itself and the relay server in response to either of transmission of the trigger of start of the peer-to-peer data communication from itself and reception of the trigger of start of the peer-to-peer data communication from the another terminal apparatus, and performing switching from the communication channel by the first communication method to the communication channel by the second communication method, whereby performing either of transmission and reception of the encryption key through the relay server.

Another data communication method according to this invention is a data communication method for use in a system enabling a peer-to-peer data communication to be performed between a terminal apparatus and another terminal apparatus based on an encryption key distributed to the terminal apparatus and the another terminal apparatus from a key managing/distributing server,
wherein the terminal apparatus performs a step of transmitting a trigger of start of the peer-to-peer data communication to the another terminal apparatus through the key managing/distributing server and through a communication channel by a first communication method, and a step of forming a communication channel by a second communication method between itself and the key managing/distributing server in response to transmission/reception of the trigger of start of the peer-to-peer data communication and performing switching from the communication channel by the first communication method to the communication channel by the second communication method, whereby receiving the encryption key from the key managing/distributing server.

A program of a data communication method according to this invention is a program of a data communication method for use in a system enabling a peer-to-peer data communication to be performed between a terminal apparatus and another terminal apparatus based on an encryption key shared by the terminal apparatus and the another terminal apparatus, and causes a computer of the terminal apparatus to execute
a step of transmitting a trigger of start of the peer-to-peer data communication to the another terminal apparatus through a relay server that relays the encryption key and through a communication channel by a first communication method, and a step of forming a communication channel by a second communication method between itself and the relay server in response to either of transmission of the trigger of start of the peer-to-peer data communication from itself and reception of the trigger of start of the peer-to-peer data communication from the another terminal apparatus, and performing switching from the communication channel by the first communication method to the communication channel by the second communication method, whereby performing either of transmission and reception of the encryption key through the relay server.

Another program of a data communication method according to this invention is a program of a data communication method for use in a system enabling a peer-to-peer data communication to be performed between a terminal apparatus and another terminal apparatus based on an encryption key distributed to the terminal apparatus and the another terminal apparatus from a key managing/distributing server, and causes a computer of the terminal apparatus to execute
a step of transmitting a trigger of start of the peer-to-peer data communication to the another terminal apparatus through the key managing/distributing server and through a communication channel by a first communication method, and a step of forming a communication channel by a second communication method between itself and the key managing/distributing server in response to transmission/reception of the trigger of start of the peer-to-peer data communication and performing switching from the communication channel by the first communication method to the communication channel by the second communication method, whereby receiving the encryption key from the key managing/distributing server.

That is, in the communication system of this invention, terminal apparatuses constantly register their location information in a SIP (Session Initiation Protocol) server and, therefore, when the terminal apparatus issues a communication request, a key managing/distributing server receives it and can transmit it in real time to the terminal apparatus on the receiving side.

In the communication system of this invention, in response to a communication request as a trigger, the key managing/distributing server distributes a unique secret key to both terminal apparatuses, which will be in communication, per communication between the terminals. Accordingly, since a different secret key (encryption key) is used for each communication, security of secret keys becomes high. Further, although a different secret key is used each time, it is not necessary to store those secret keys on the terminal apparatus side. Consequently, the communication system of this invention enables a secure P2P (Peer to Peer: direct communication between terminals) data communication between terminal apparatuses, particularly between portable telephone terminals.

The terminal apparatus according to this invention is a terminal adapted to perform communication using a SIP (Session Initiation Protocol) and constantly registers its location information with respect to the SIP server. When a certain terminal apparatus requests a P2P communication with another terminal apparatus, the SIP server using their registered location information proxies a communication start request from the terminal apparatus on the sending side to the terminal apparatus on the receiving side, so that each of the terminal apparatuses performs a location information registration process for reconstructing a signaling session using an IPsec [IP (Internet Protocol) security protocol]. Through this operation, the terminal apparatuses according to this invention each can form a tunnel for secure information transmission and reception between itself and the SIP server.

The terminal apparatuses according to this invention each transmit a message, notifying completion of the tunnel formation between itself and the SIP server, to the key managing/distributing server, which performs key management and delivery, through the SIP server. In response thereto, the key managing/distributing server transmits a signal, for establishing a secure data session, to each of the terminal apparatus on the sending side and the terminal apparatus on the receiving side through the SIP server, thereby enabling establishment of data sessions to be used for key delivery.

The terminal apparatuses according to this invention receive a secret key, only applicable to that communication, from the key managing/distributing server through the secure data sessions and each transmit a message indicative of completion of the reception, so that it becomes possible to receive, from the key managing/distributing server, a request for data session switching [request for switching to a P2P session (this represents rewriting of session destination addresses and includes addition of the P2P session)] for establishing P2P connection between the terminal apparatus on the sending side and the terminal apparatus on the receiving side.

Upon receipt of the data session switching request, the terminal apparatus according to this invention can establish an encrypted data session with the partner terminal using the delivered secret key.

For establishing a secure signaling session with the SIP server or establishing an encrypted secure data session with the key managing/distributing server, the terminal apparatus according to this invention may have an encryption key exchanged in advance or both may have public keys.

Accordingly, in the communication system of this invention, with the terminal apparatuses each including a SIP module, the terminal apparatus on the sending side transmits a data communication start trigger to the terminal apparatus on the receiving side through the SIP server and the key managing/distributing server, thereby enabling the terminal apparatus on the receiving side to receive this trigger in real time.

With the trigger when the terminal apparatus on the sending side and the terminal apparatus on the receiving side both transmit and receive the data communication start trigger, the terminal apparatuses perform again the location information registration process with respect to the SIP server and, simultaneously, establish signaling sessions between them and the SIP server using the IPsec. By this operation, in the communication system of this invention, the establishing time of the IPsec sessions between the SIP server and the portable terminal apparatuses and the number of the IPsec session establishing terminal apparatuses can be reduced and thus the network load and the server load can be reduced. By performing the signaling on these IPsec sessions, encryption of user information and data necessary for the signaling is performed, thus enabling secure communication.

Exchange of a secret key for use in P2P data communication between the terminal apparatus on the sending side and the terminal apparatus on the receiving side can be performed through the foregoing signaling sessions on the IPsec. However, by establishing on the IPsec the data sessions between the key managing/distributing server and the terminal apparatus on the sending side and between the key managing/distributing server and the terminal apparatus on the receiving side and exchanging the secret key on these sessions, there is no chance of the server apparatus such as the SIP server proxying data including the secret key and hence the secret key never can be referred to, thus enabling more secure delivery and management of the secret key.

Since a secret key for use in P2P data communication is generated per communication by the key managing/distributing server and delivered to the terminal apparatus on the sending side and the terminal apparatus on the receiving side, a different secret key is used for each communication. Therefore, in the communication system of this invention, it becomes possible to prevent a once-used secret key from further continuing to be used unfairly or prevent unauthorized use of a secret key otherwise caused by loss thereof.

With the structure and operation as will be described hereinbelow, this invention achieves effects that can prevent unauthorized use of an encryption key otherwise caused by loss thereof and that can securely perform a direct communication between terminals using the encryption key.

### Brief Description of the Drawings

Fig. 1 is a block diagram showing the structure of a communication system according to one embodiment of this invention;
Fig. 2 is a block diagram showing a structural example of a portable terminal apparatus in Fig. 1;
Fig. 3 is a block diagram showing a structural example of a SIP server in Fig. 1;
Fig. 4 is a block diagram showing a structural example of a key managing/distributing server in Fig. 1;
Fig. 5 is a sequence chart showing an example of operation of the communication system according to the one embodiment of this invention;
Fig. 6 is a sequence chart showing the example of operation of the communication system according to the one embodiment of this invention;
Fig. 7 is a block diagram showing the structure of a communication system according to another embodiment of this invention;
Fig. 8 is a block diagram showing a structural example of a PC terminal in Fig. 7;
Fig. 9 is a block diagram showing a structural example of a gateway server in Fig. 7;
Fig. 10 is a sequence chart showing the operation of the communication system according to the other embodiment of this invention;
Fig. 11 is a sequence chart showing the operation of the communication system according to the other embodiment of this invention;
Fig. 12 is a block diagram showing the structure of a communication system according to a different embodiment of this invention;
Fig. 13 is a sequence chart showing the operation of the mobile payment system according to the different embodiment of this invention; and
Fig. 14 is a sequence chart showing the operation of the mobile payment system according to the different embodiment of this invention.

### Best Mode for Carrying Out the Invention

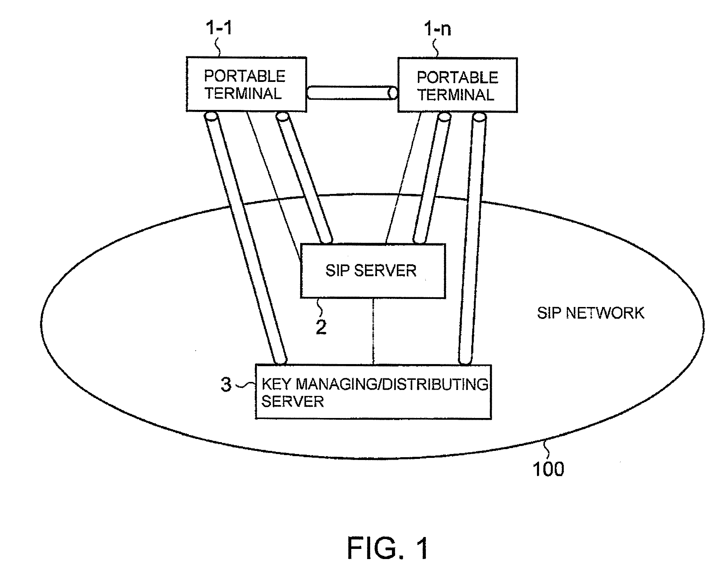

Now, embodiments of this invention will be described with reference to the drawings. Fig. 1 is a block diagram showing the structure of a communication system according to one embodiment of this invention. In Fig. 1, the communication system according to the one embodiment of this invention comprises portable terminal apparatuses 1-1 to 1-n, a SIP (Session Initiation Protocol) server 2, and a key managing/distributing server 3. Herein, the SIP server 2 and the key managing/distributing server 3 form a SIP network 100 and the portable terminal apparatuses 1-1 to 1-n represent portable terminals such as portable telephones, PDAs (Personal Digital Assistants), or notebook-type PC (Personal Computer) terminals. In Fig. 1, there is shown P2P (Peer to Peer direct communication between terminals) communication between the portable terminal apparatuses 1-1 and 1-n and the illustration of a wireless base station and a wireless communication network for wireless communication between the portable terminal apparatuses 1-1 and 1-n is omitted, and further, explanation of the operation thereof is also omitted because it is known.

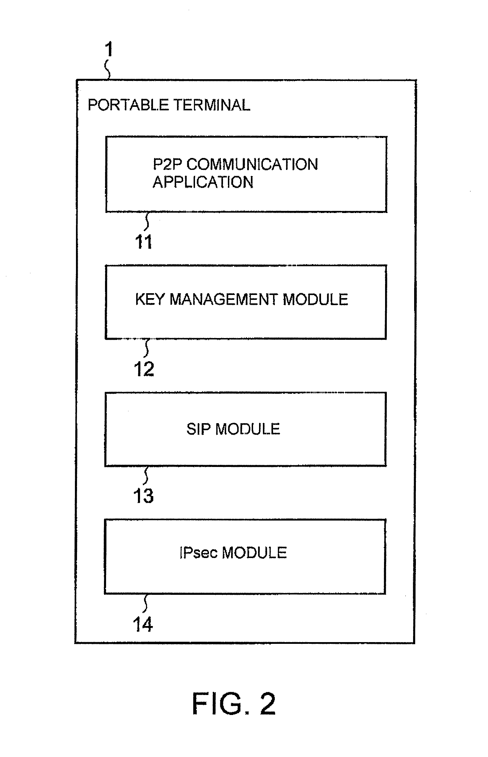

Fig. 2 is a block diagram showing a structural example of the portable terminal apparatus 1 in Fig. 1. In Fig. 2, the portable terminal apparatus 1 comprises a P2P communication application 11, a key management module 12, a SIP module 13, and an IPsec [IP (Internet Protocol) security protocol] module 14. These respective modules of the purchaser portable terminal 1 can also be realized through execution of programs (programs operable in a computer) by a non-illustrated CPU (Central Processing Unit). It is assumed that the foregoing portable terminal apparatuses 1-1 to 1-n each have the same structure and perform the same operation as those of this portable terminal apparatus 1.

The portable terminal apparatus 1 includes the SIP module and periodically performs a location registration process being the function of registering a destination IP (Internet Protocol) address with respect to the SIP server 2. The portable terminal apparatus 1 already shares a secret key at the time of the location registration process for performing a communication with the SIP server 2 and thus establishes a secure signaling session without newly exchanging a secret key. The portable terminal apparatus 1 establishes a data session with another portable terminal apparatus for exchanging (sending and receiving) data therebetween. When the portable terminal apparatus 1 establishes the data session with the other portable terminal apparatus, exchange of a secret key is required between the portable terminal apparatus 1 and the other portable terminal apparatus. However, since this secret key is delivered thereto from the key managing/distributing server 3 through secure data sessions, respectively, use is made of it. As a method of this key delivery, there is, for example, the DH (Diffie-Hellman) method or the like.

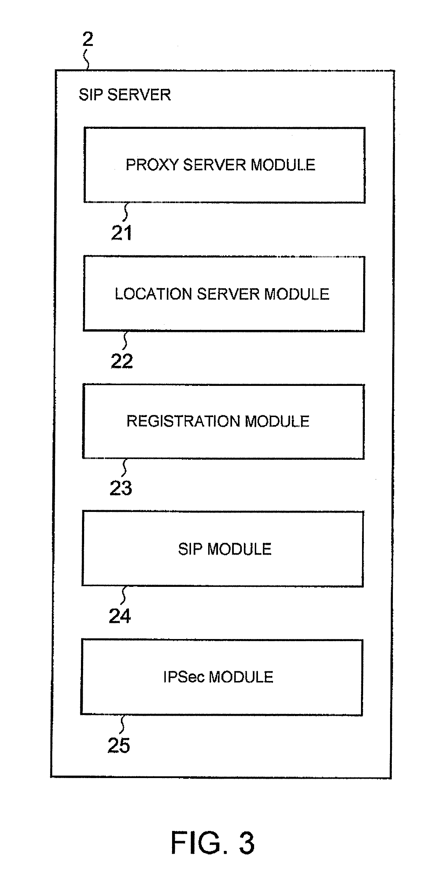

Fig. 3 is a block diagram showing a structural example of the SIP server 2 in Fig. 1. In Fig. 3, the SIP server 2 comprises a proxy server module 21, a location server module 22, a registration module 23, a SIP module 24, and an IPsec module 25. These respective modules of the SIP server 2 can also be realized through execution of programs by a non-illustrated CPU.

The SIP server 2 has the function of storing IP address information of the portable terminal apparatuses 1-1 and 1-n and transferring messages sent from the portable terminal apparatuses 1-1 and 1-n to the key managing/distributing server 3 or other portable terminals. While the portable terminal apparatuses 1-1 and 1-n are not in P2P communication, the SIP server 2 only holds the IP address information without setting up secure signaling sessions therewith. In response to receipt of re-registrations for setting up secure signaling sessions from the portable terminal apparatuses 1-1 and 1-n, the SIP server 2 establishes the secure signaling sessions with the portable terminal apparatuses 1-1 and 1-n.

Thereafter, using these sessions, the SIP server 2 sends and receives messages for establishing encrypted secure data sessions between the portable terminal apparatuses 1-1 and 1-n and between the portable terminal apparatuses 1-1 and 1-n and the key managing/distributing server 3. The SIP server 2 manages only domain information with respect to the portable terminal apparatuses 1-1 and 1-n and the key managing/distributing server 3, and personal information and the like are all exchanged through the data sessions and are never decoded by the SIP server 2.

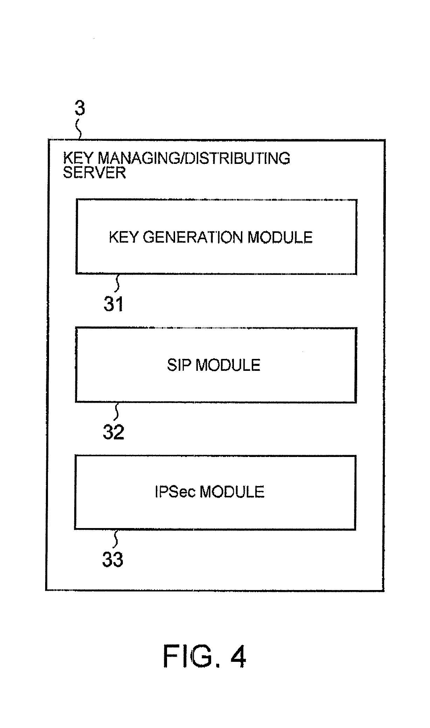

Fig. 4 is a block diagram showing a structural example of the key managing/distributing server 3 in Fig. 1. In Fig. 4, the key managing/distributing server 3 comprises a key generation module 31, a SIP module 32, and an IPsec module 33. These respective modules of the key managing/distributing server 3 can also be realized through execution of programs by a non-illustrated CPU.

The key managing/distributing server 3 includes the SIP module and constantly sets up a secure signaling session with the SIP server 2. In response to receipt of a communication start request from the portable terminal apparatus 1-1 and confirmation of establishment of the secure signaling sessions between the portable terminal apparatuses 1-1 and 1-n and the SIP server 2, the key managing/distributing server 3 transmits messages for establishing secure data sessions to both the portable terminal apparatuses 1-1 and 1-n.

Using these sessions, the key managing/distributing server 3 delivers a key for use in P2P communication between both portable terminals, i.e. the portable terminal apparatuses 1-1 and 1-n. Thereafter, the key managing/distributing server 3 performs signaling for establishing secure data sessions between the portable terminal apparatuses 1-1 and 1-n. That is, the key managing/distributing server 3 performs delivery control of an encryption key for switching to a P2P session (this represents rewriting of session destination addresses and includes addition of the P2P session) between the portable terminal apparatuses 1-1 and 1-n and establishing the P2P session (IPsec) per communication.

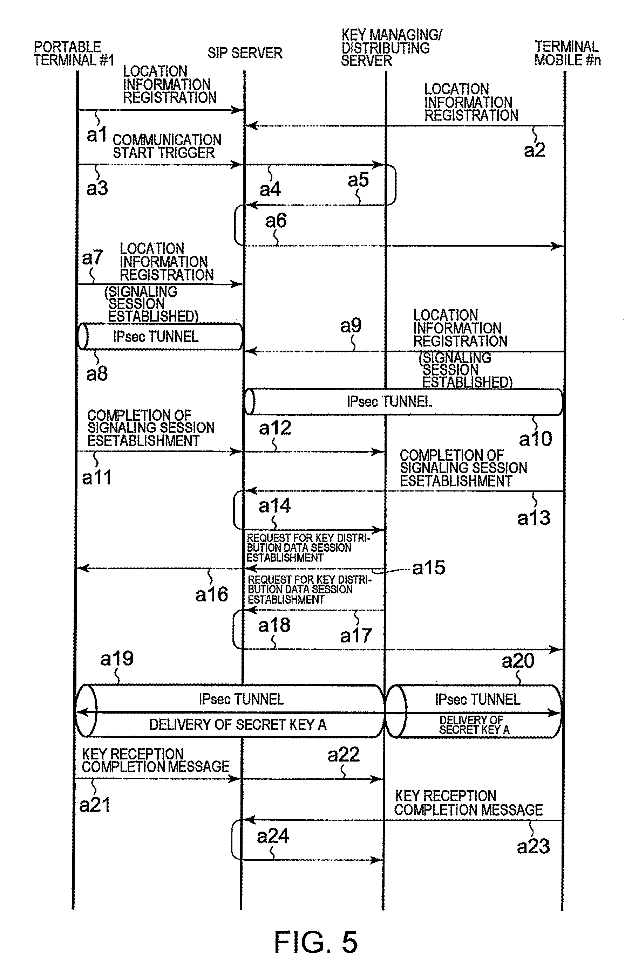

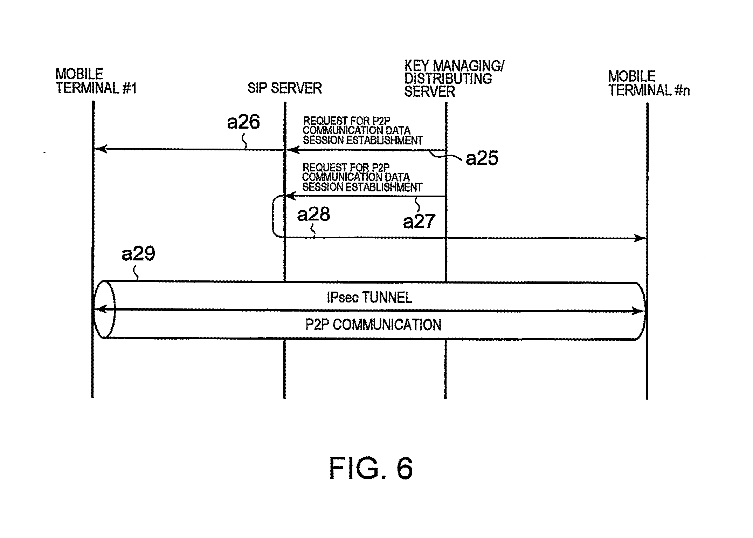

Figs. 5 and 6 are sequence charts showing an example of operation of the communication system according to the one embodiment of this invention. Referring to Figs. 1 to 6, the operation of the mobile communication system according to the one embodiment of this invention will be described. Operations of the portable terminal apparatuses (#1) 1-1 and (#n) 1-n and the key managing/distributing server 3 in Figs. 5 and 6 can also be realized through execution of programs by the non-illustrated CPUs.

The portable terminal apparatus (#1) 1-1 performs a location registration process of its own with respect to the registration module 23 of the SIP server 2 using the SIP module 13 (see a1 in Fig. 5), thereby causing the location server module 22 of the SIP server 2 to hold location information thereof. Like the portable terminal apparatus (#1) 1-1, the portable terminal apparatus (#n) 1-n also performs a location registration process (see a2 in Fig. 5), thereby causing the location server module 22 of the SIP server 2 to hold location information thereof.

When the portable terminal apparatus (#1) 1-1 transmits a P2P communication trigger message to the proxy server module 21 of the SIP server 2 (see a3 in Fig. 5), the proxy server module 21 of the SIP server 2 transfers the message to the key managing/distributing server 3 (see a4 in Fig. 5). The key managing/distributing server 3 transmits the P2P communication trigger message from the portable terminal apparatus (#1) 1-1 back to the proxy server module 21 of the SIP server 2 (see a5 in Fig. 5). Based on the location information of the portable terminal apparatus (#n) 1-n held in the location server module 22, the SIP server 2 transfers the message to the portable terminal apparatus (#n) 1-n (see a6 in Fig. 5). In this case, since the P2P communication trigger includes no personal information, the transmission is enabled in the state before setting up IPsec sessions.

In response to the foregoing message transmission/reception as triggers, the portable terminal apparatuses (#1) 1-1 and (#n) 1-n each again perform the location registration process by the SIP module 13. In the process, each of them starts the IPsec module 12 and forms an IPsec tunnel between itself and the IPsec module 25 of the SIP server 2 (see a7 to a10 in Fig. 5). At the time of the location information registrations (see a7 and a9 in Fig. 5), signaling sessions are established.

When the formation of the IPsec tunnels with respect to the SIP server 2 is completed, the portable terminal apparatuses (#1) 1-1 and (#n) 1-n each transmit a message addressed to the key managing/distributing server 3, thereby notifying the SIP server 2 of the completion of the IPsec tunnel formation (see a11 and a13 in Fig. 5). The SIP server 2 transfers these notifications to the key managing/distributing server 3 (see a12 and a14 in Fig. 5).

The key managing/distributing server 3 transmits a message requesting establishment of an IPsec data session to the portable terminal apparatus (#1) 1-1 through the SIP server 2 (see a15 and a16 in Fig. 5), establishes the IPsec data session between itself and the portable terminal apparatus (#1) 1-1 (see a17 in Fig. 5), and, using the IPsec data session, delivers a secret key A generated by the key generation module 31 to the portable terminal apparatus (#1)1-1.

Likewise, the key managing/distributing server 3 transmits a message requesting establishment of an IPsec data session to the portable terminal apparatus (#n) 1-n through the SIP server 2 (see a18 and a19 in Fig. 5), establishes the IPsec data session between itself and the portable terminal apparatus (#n) 1-n (see a20 in Fig. 5), and, using the IPsec data session, delivers the secret key A generated by the key generation module 31 to the portable terminal apparatus (#n) 1-n.

In response to receipt of the same secret key A from the key managing/distributing server 3 through the SIP server 2, the portable terminal apparatuses (#1) 1-1 and (#n) 1-n each transmit a key reception completion message to the key managing/distributing server 3 through the SIP server 2 (see a21 to a24 in Fig. 5). In response to receipt of the key reception completion messages, the key managing/distributing server 3 transmits a request for P2P communication data session establishment to each of the portable terminal apparatuses (#1) 1-1 and (#n) 1-n through the SIP server 2 (see a25 to a28 in Fig. 6). By this, an IPsec data session is established between the portable terminal apparatuses (#1) 1-1 and (#n) 1-n (see a29 in Fig. 6).

As described above, in this embodiment, with the configuration that the portable terminal apparatuses (#1) 1-1 and (#n) 1-n each include the SIP module, the portable terminal apparatus (#1) 1-1 on the sending side transmits the data communication start trigger to the portable terminal apparatus (#n) 1-n on the receiving side through the SIP server 2 and the key managing/distributing server 3, thereby enabling the portable terminal apparatus (#n) 1-n on the receiving side to receive this trigger in real time.

With the trigger when the portable terminal apparatus (#1) 1-1 on the sending side and the portable terminal apparatus (#n) 1-n on the receiving side both transmit and receive the data communication start trigger, the portable terminal apparatuses (#1) 1-1 and (#n) 1-n perform again the location information registration process with respect to the SIP server 2 and, simultaneously, establish the signaling sessions between them and the SIP server 2 using the IPsec. By this operation, in this embodiment, the establishing time of the IPsec sessions between the SIP server 2 and the portable terminal apparatuses (#1) 1-1 and (#n) 1-n and the number of the IPsec session establishing terminal apparatuses can be reduced and thus the network load and the server load can be reduced. By performing the signaling on these IPsec sessions, encryption of user information and data necessary for the signaling is performed, thus enabling secure communication.

Exchange of a secret key for use in P2P data communication between the portable terminal apparatus (#1) 1-1 on the sending side and the portable terminal apparatus (#n) 1-n on the receiving side can be performed through the foregoing signaling sessions on the IPsec. However, by establishing on the IPsec the data sessions between the key managing/distributing server 3 and the portable terminal apparatus (#1) 1-1 on the sending side and between the key managing/distributing server 3 and the portable terminal apparatus (#n) 1-n on the receiving side and exchanging the secret key on these sessions, there is no chance of the server apparatus such as the SIP server 2 proxying data including the secret key and hence the secret key cannot be referred to, thus enabling more secure delivery and management of the secret key.

Since a secret key for use in P2P data communication is generated per communication by the key managing/distributing server 3 and delivered to the portable terminal apparatus (#1) 1-1 on the sending side and the portable terminal apparatus (#n) 1-n on the receiving side, a different secret key is used for each communication. Therefore, in this embodiment, it is possible to prevent a once-used secret key from further continuing to be used unfairly or prevent unauthorized use of a secret key otherwise caused by loss thereof.

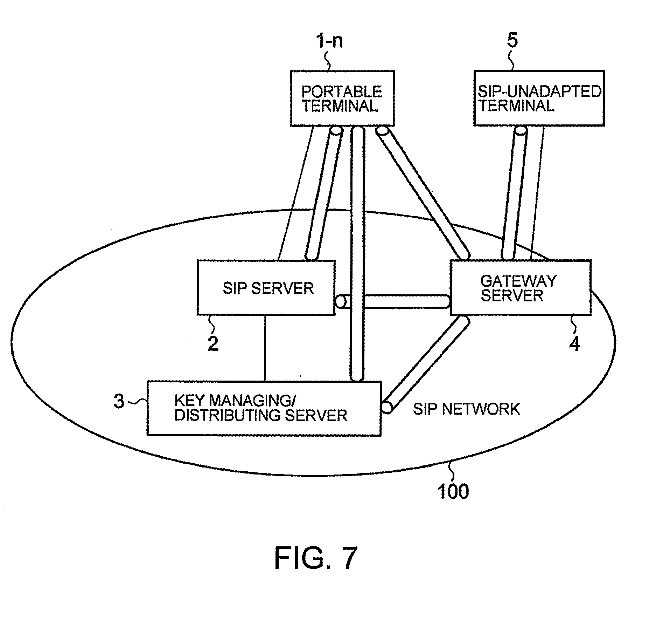

Fig. 7 is a block diagram showing the structure of a communication system according to another embodiment of this invention. In Fig. 7, the communication system according to the other embodiment of this invention has the same structure as that of the communication system according to the one embodiment of this invention shown in Fig. 1 except that a gateway server 4 and a SIP-unadapted terminal [e.g. a terminal including a fixed terminal such as a desktop PC (Personal Computer) terminal or a portable terminal] 5 are provided instead of the portable terminal apparatus 1-1, wherein the same symbols are assigned to the same components. Herein, the SIP server 2, the key managing/distributing server 3, and the gateway server 4 form a SIP network 100.

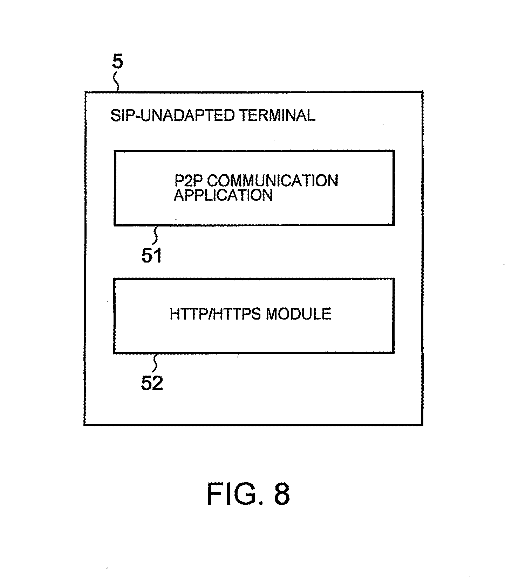

Fig. 8 is a block diagram showing a structural example of the SIP-unadapted terminal 5 in Fig. 7. In Fig. 8, the SIP-unadapted terminal 5 comprises a P2P communication application 51 and an HTTP/HTTPS (Hyper Text Transfer Protocol over transport layer security/secure sockets layer) module 52. These respective modules of the SIP-unadapted terminal 5 can also be realized through execution of programs by a non-illustrated CPU.

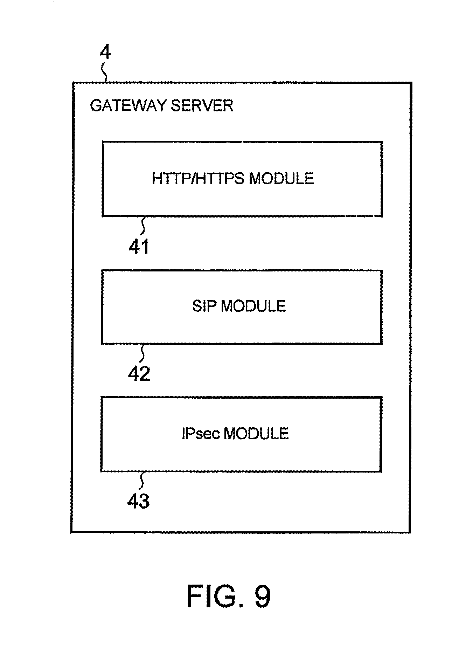

Fig. 9 is a block diagram showing a structural example of the gateway server 4 in Fig. 7. In Fig. 9, the gateway server 4 comprises an HTTP/HTTPS module 41, a SIP module 42, and an IPsec module 43. These respective modules of the gateway server 4 can also be realized through execution of programs by a non-illustrated CPU.

The gateway server 4 is a protocol conversion server that, when the SIP-unadapted terminal 5 to be used in P2P communication has no SIP module, enables a P2P communication between the SIP-unadapted terminal 5 and a terminal (portable terminal apparatus 1-n) having a SIP module. In response to receipt of a P2P communication request from the SIP-unadapted terminal 5 requested by HTTPS, the gateway server 4 performs a registration process with respect to the SIP server 2 using its own IP address as a destination IP address and transmits a P2P communication request message to the portable terminal apparatus 1-n through the SIP server 2 and the key managing/distributing server 3.

In response to receipt of a request from the key managing/distributing server 3, the gateway server 4 establishes a data session between itself and the portable terminal apparatus 1-n or the key managing/distributing server 3. When the gateway server 4 establishes the data session with the portable terminal apparatus 1-n, exchange of a secret key is required between the gateway server 4 and the portable terminal apparatus 1-n. However, since this secret key is delivered thereto from the key managing/distributing server 3, use is made of it.

The SIP-unadapted terminal 5 performs a P2P communication through the gateway server 4 based on the establishment of the data session with the portable terminal apparatus 1-n. In this event, the gateway server 4 notifies the contents of the P2P communication to the SIP-unadapted terminal 5 by HTTPS.

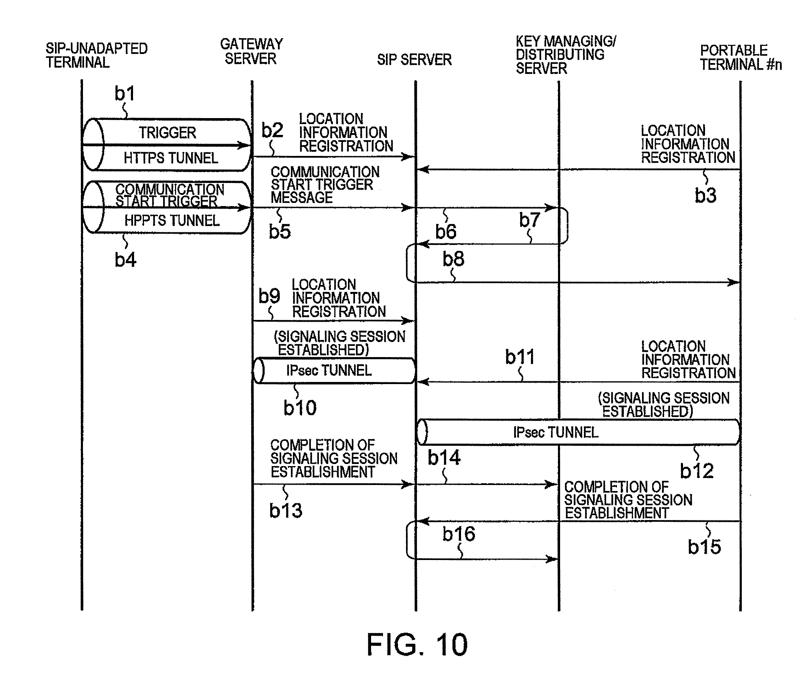

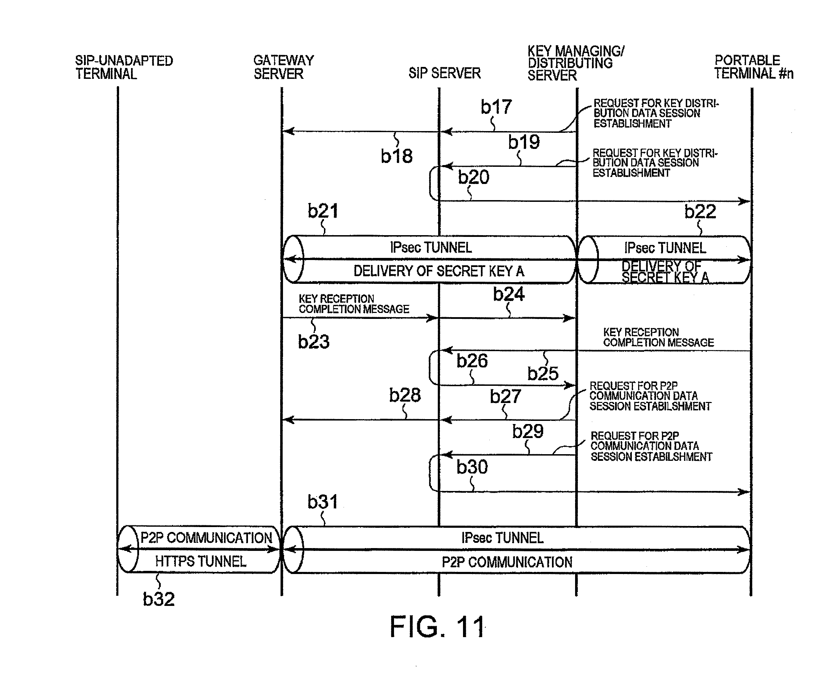

Figs. 10 and 11 are sequence charts showing the operation of the communication system according to the other embodiment of this invention. Referring to Figs. 3, 4, and 7 to 11, the operation of the communication system according to the other embodiment of this invention will be described. Operations of the portable terminal apparatus 1-n, the key managing/distributing server 3, the gateway server 4, and the SIP-unadapted terminal 5 in Figs. 10 and 11 can also be realized through execution of programs by the non-illustrated CPUs.

The SIP-unadapted terminal 5 having no SIP module forms an HTTPS tunnel with respect to the HTTP/HTTPS module 41 of the gateway server 4 and transmits a trigger for performing a location registration process with respect to the SIP server 2 (see b1 in Fig. 10). The gateway server 4 uses the SIP module 42 to perform the location registration process with respect to the SIP server 2 on behalf of the SIP-unadapted terminal 5 (see b2 in Fig. 10), thereby causing the location server module 22 of the SIP server 2 to hold location information thereof. Like the gateway server 4, the portable terminal apparatus (#n) 1-n also performs a location registration process (see b3 in Fig. 10), thereby causing the location server module 22 of the SIP server 2 to hold location information thereof.

The SIP-unadapted terminal 5 transmits a payment request trigger message from the HTTP/HTTPS module 52 (see b4 in Fig. 11) and the HTTP/HTTPS module 41 of the gateway server 4 in receipt thereof delivers the message to the SIP module 42. The SIP module 42 transmits the message to the proxy server module 21 of the SIP server 2 (see b5 in Fig. 10) and then the proxy server module 21 of the SIP server 2 transfers the message to the key managing/distributing server 3 (see b6 in Fig. 10). The key managing/distributing server 34 transmits the P2P communication request trigger message from the SIP-unadapted terminal 5 back to the proxy server module 21 of the SIP server 2 (see b7 in Fig. 10). Then, based on the location information of the portable terminal apparatus (#n) 1-n held in the location server module 22, the SIP server 2 transfers the message to the portable terminal apparatus (#n) 1-n (see b8 in Fig. 10). In this case, since the payment request trigger includes no personal information, the transmission is enabled in the state before setting up IPsec sessions.

In response to the foregoing message transmission/reception as triggers, the gateway server 4 and the portable terminal apparatus (#n) 1-n each again perform the location registration process by the SIP module 42 or 13 (see b9 and b11 in Fig. 10). In the process, each of them starts the IPsec module 43 or 14 and forms an IPsec tunnel between itself and the IPsec module 25 of the SIP server 2 (see b10 and b12 in Fig. 10). At the time of the location information registrations, signaling sessions are established. When the formation of the IPsec tunnels with respect to the SIP server 2 is completed, the gateway server 4 and the portable terminal apparatus (#n) 1-n each transmit a message addressed to the key managing/distributing server 3, thereby notifying the SIP server 2 of the completion of the IPsec tunnel formation (see b13 and b15 in Fig. 10). The SIP server 2 transfers these notifications to the key managing/distributing server 3 (see b14 and b16 in Fig. 10).

The key managing/distributing server 3 transmits a message requesting establishment of an IPsec data session to the gateway server 4 through the SIP server 2 (see b17 and b18 in Fig. 11), establishes the IPsec data session between itself and the gateway server 4 (see b21 in Fig. 11), and, using the IPsec data session, delivers a secret key A generated by the key generation module 31 to the gateway server 4. Likewise, an IPsec data session is established between the key managing/distributing server 3 and the portable terminal apparatus (#n) 1-n (see b19, b20, and b22 in Fig. 11) and, using the IPsec data session, the secret key A generated by the key generation module 31 is delivered to the portable terminal apparatus (#n) 1-n. It is also possible to establish a data session between the key managing/distributing server 3 and the gateway server 4 without using the IPsec.

In response to receipt of the same secret key A from the key managing/distributing server 3 through the SIP server 2, the gateway server 4 and the portable terminal apparatus (#n) 1-n each transmit a key reception completion message to the key managing/distributing server 3 through the SIP server 2 (see b23 to b26 in Fig. 11). In response to receipt of the key reception completion messages, the key managing/distributing server 3 transmits a request for P2P communication data session establishment to each of the gateway server 4 and the portable terminal apparatus (#n) 1-n through the SIP server 2 (see b27 to b30 in Fig. 11). By this, an IPsec data session is established between the gateway server 4 and the portable terminal apparatus (#n) 1-n (see b31 in Fig. 11).

In this case, since the HTTPS tunnel is formed between the SIP-unadapted terminal 5 and the gateway server 4, when a P2P communication is performed based on the establishment of the IPsec data session between the portable terminal apparatus (#n) 1-n and the gateway server 4, the gateway server 4 transmits information thereof to the SIP-unadapted terminal 5 through conversion to HTTPS (see b32 in Fig. 11).

As described above, in this embodiment, by forming the IPsec tunnel between the SIP-unadapted terminal 5 having no SIP module and the portable terminal apparatus (#n) 1-n on the receiving side through the gateway server 4 having the SIP module, it is possible, like in the foregoing one embodiment of this invention, to prevent unauthorized use of an encryption key otherwise caused by loss thereof and to securely perform a direct communication between the terminals using the encryption key even in the case of the SIP-unadapted terminal 5 having no SIP module.

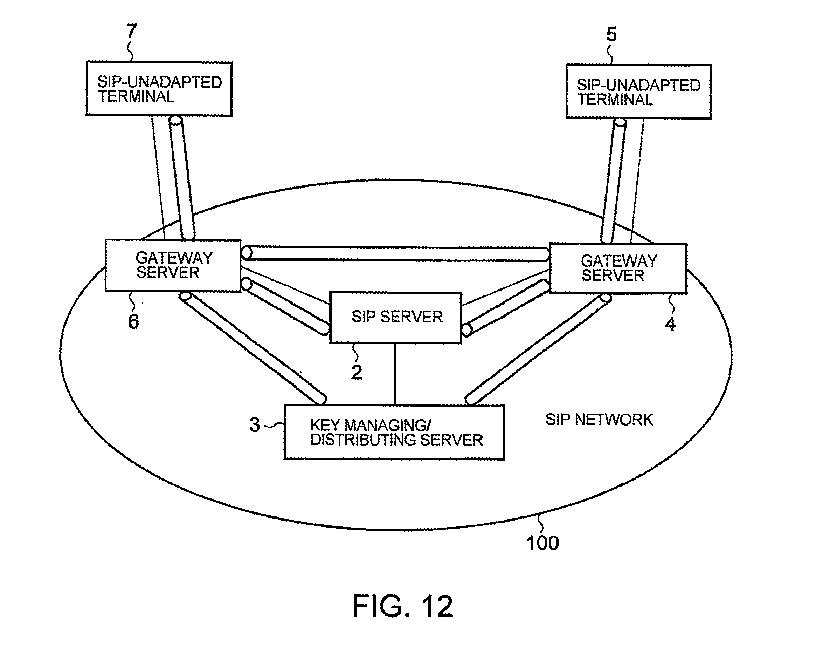

Fig. 12 is a block diagram showing the structure of a communication system according to a different embodiment of this invention. In Fig. 12, the payment system according to the different embodiment of this invention has the same structure as that of the communication system according to the other embodiment of this invention shown in Fig. 8 except that a gateway server 6 and a SIP-unadapted terminal 7 are provided instead of the portable terminal apparatus 1-n, wherein the same symbols are assigned to the same components. Herein, the SIP server 2, the key managing/distributing server 3, and the gateway servers 4 and 6 form a SIP network 100. The SIP-unadapted terminals 5 and 7 each have the same structure as that of the SIP-unadapted terminal 5 shown in Fig. 8 and the gateway servers 4 and 6 each have the same structure as that of the gateway server 4 shown in Fig. 9, wherein operations thereof are the same as those described above.

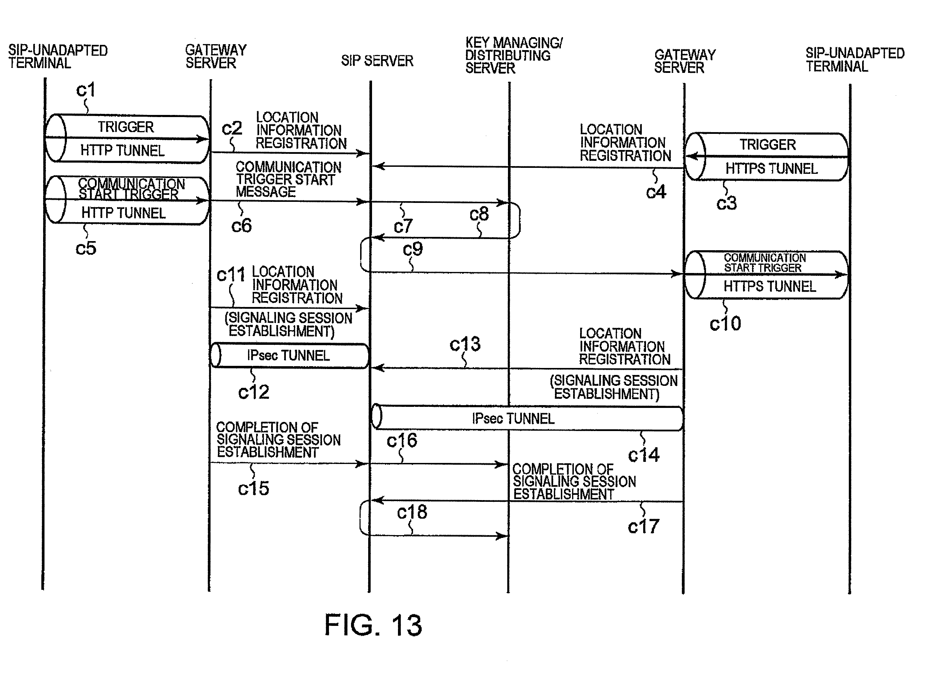

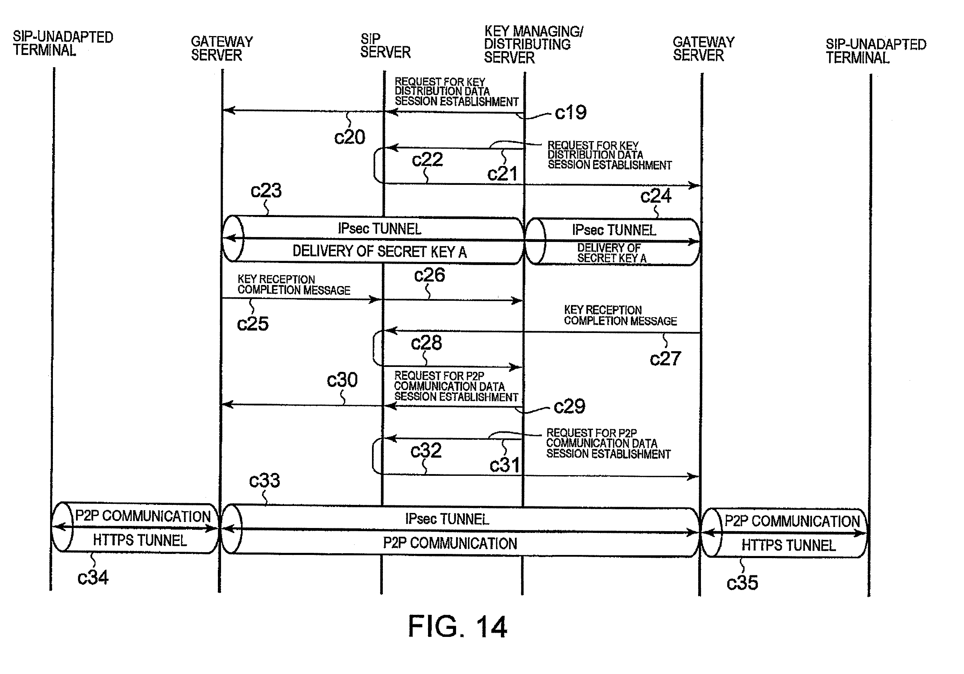

Figs. 13 and 14 are sequence charts showing the operation of the mobile payment system according to the different embodiment of this invention. Referring to Figs. 3, 4, 8, 9, and 12 to 14, the operation of the communication system according to the different embodiment of this invention will be described. Operations of the key managing/distributing server 3, the gateway servers 4 and 6, and the SIP-unadapted terminals 5 and 7 in Figs. 13 and 14 can also be realized through execution of programs by the non-illustrated CPUs.

The SIP-unadapted terminal 5 having no SIP module forms an HTTPS tunnel with respect to the HTTP/HTTPS module 41 of the gateway server 4 and transmits a trigger for performing a location registration process with respect to the SIP server 2 (see c1 in Fig. 13). The gateway server 4 uses the SIP module 42 to perform the location registration process with respect to the SIP server 2 on behalf of the SIP-unadapted terminal 5 (see c2 in Fig. 13), thereby causing the location server module 22 of the SIP server 2 to hold location information thereof. Likewise, the SIP-unadapted terminal 7 having no SIP module forms an HTTPS tunnel with respect to the HTTP/HTTPS module 41 of the gateway server 6 and transmits a trigger for performing a location registration process with respect to the SIP server 2 (see c3 in Fig. 13). The gateway server 6 uses the SIP module 43 to perform the location registration process with respect to the SIP server 2 on behalf of the SIP-unadapted terminal 7 (see c4 in Fig. 13), thereby causing the location server module 22 of the SIP server 2 to hold location information thereof.

The SIP-unadapted terminal 5 transmits a payment request trigger message from the HTTP/HTTPS module 52 (see c5 in Fig. 13) and the HTTP/HTTPS module 41 of the gateway server 4 in receipt thereof delivers the message to the SIP module 42. The SIP module 42 transmits the message to the proxy server module 21 of the SIP server 2 (see c6 in Fig. 13) and then the proxy server module 21 of the SIP server 2 transfers the message to the key managing/distributing server 3 (see c7 in Fig. 13).

The key managing/distributing server 3 transmits the payment request trigger message from the SIP-unadapted terminal 5 back to the proxy server module 21 of the SIP server 2 (see c8 in Fig. 13). Then, based on the location information of the gateway server 6 held in the location server module 22, the SIP server 2 transfers the message to the gateway server 6 (see c9 in Fig. 13). The gateway server 6 transmits the message to the SIP-unadapted terminal 7 through the HTTPS tunnel (see c10 in Fig. 13). In this case, since the payment request trigger includes no personal information, the transmission is enabled in the state before setting up IPsec sessions.

In response to the foregoing message transmission/reception as triggers, the gateway servers 4 and 6 each again perform the location registration process by the SIP module 42 (see c11 and c13 in Fig. 13). In the process, each of them starts the IPsec module 43 and forms an IPsec tunnel between itself and the IPsec module 25 of the SIP server 2 (see c12 and c14 in Fig. 13). At the time of the location information registrations, signaling sessions are established. When the formation of the IPsec tunnels with respect to the SIP server 2 is completed, the gateway servers 4 and 6 each transmit to the SIP server 2 a message addressed to the key managing/distributing server 3, thereby notifying the completion of the IPsec tunnel formation (see c15 and c17 in Fig. 13). The SIP server 2 transfers these notifications to the key managing/distributing server 3 (see c16 and c18 in Fig. 13).

The key managing/distributing server 3 transmits a message requesting establishment of an IPsec data session to the gateway server 4 through the SIP server 2 (see c19 and c20 in Fig. 14), establishes the IPsec data session between itself and the gateway server 5 (see c23 in Fig. 14), and, using the IPsec data session, delivers a secret key A generated by the key generation module 31 to the gateway server 4. Likewise, an IPsec data session is established between the key managing/distributing server 3 and the gateway server 6 (see c21, c22, and c24 in Fig. 14) and, using the IPsec data session, the secret key A generated by the key generation module 31 is delivered to the gateway server 6. It is also possible to establish a data session between the key managing/distributing server 3 and each of the gateway servers 4 and 6 without using the IPsec.

In response to receipt of the same secret key A from the key managing/distributing server 3 through the SIP server 2, the gateway servers 4 and 6 each transmit a key reception completion message to the key managing/distributing server 3 through the SIP server 2 (see c25 to c28 in Fig. 14). In response to receipt of the key reception completion messages, the key managing/distributing server 3 transmits a request for P2P communication data session establishment to each of the gateway servers 4 and 6 through the SIP server 2 (see c29 to c32 in Fig. 14). By this, an IPsec data session is established between the gateway servers 4 and 6 (see c33 in Fig. 14).

In this case, since the HTTPS tunnels are formed between the SIP-unadapted terminal 5 and the gateway server 4 and between the SIP-unadapted terminal 7 and the gateway server 6, respectively, the contents of a P2P communication based on the establishment of the IPsec data session between the gateway servers 4 and 6 are converted to HTTPS in the gateway servers 4 and 6 and transmitted to the SIP-unadapted terminals 5 and 7 (see c34 and c35 in Fig. 14).

As described above, in this embodiment, by forming the IPsec tunnel between the SIP-unadapted terminals 5 and 7 each having no SIP module through the gateway servers 4 and 6 each having the SIP module, it is possible, like in the foregoing one embodiment of this invention, to prevent unauthorized use of an encryption key otherwise caused by loss thereof and to securely perform a direct communication between the terminals using the encryption key even between the SIP-unadapted terminals 5 and 7 each having no SIP module.

### Industrial Applicability

In each of the embodiments, the key managing/distributing server 3 is provided and a secret key (encryption key) generated by the key managing/distributing server 3 is distributed to respective terminals that perform a P2P communication. However, it may also be arranged that one of terminals that perform a P2P communication generates a secret key and the secret key is delivered to the other terminal through a relay server that relays the secret key. Therefore, this invention is not limited to the embodiments. In this case, the relay server only relays the secret key and does not participate in encryption. Further, by periodically discarding a secret key after use, it is possible to ensure a more secure communication channel.

Further, in each of the foregoing embodiments, HTTP is described as the communication method between the terminal having no SIP module and the gateway server. However, this invention is also applicable to a communication method such as short-range wireless communication [e.g. Bluetooth (registered trademark), ZigBee (international registered trademark), or the like], UWB (Ultra WideBand), or infrared communication [IrDA (Infrared Data Association)].

## Claims

1. A communication system enabling a data communication to be performed between a first and a second terminal apparatus based on an encryption key shared by said first terminal apparatus and said second terminal apparatus, said communication system **characterized in that**
one of said first terminal apparatus and said second terminal apparatus notifies a trigger of start of said data communication to the other of said first terminal apparatus and said second terminal apparatus through a communication channel by a first communication method, and
said first terminal apparatus and said second terminal apparatus, in response to transmission and reception of said trigger of start of said data communication, each form a communication channel by a second communication method between itself and a relay server that relays said encryption key and each perform switching from the communication channel by said first communication method to the communication channel by said second communication method, whereby sharing said encryption key between said first terminal apparatus and said second terminal apparatus through said relay server.

2. A communication system according to claim 1, **characterized in that** said data communication performed between said first and second terminal apparatuses is a peer-to-peer data communication.

3. A communication system according to claim 1, **characterized in that** said first terminal apparatus and said second terminal apparatus each register, in advance, location information indicative of its own location, and
said second communication method is a communication method that, using a communication method of forming a communication channel between the apparatuses using said location information, forms an encrypted communication channel using said encryption key between each of said first and second terminal apparatuses and said relay server.

4. A communication system according to claim 1, **characterized by** including a server apparatus in which said first terminal apparatus and said second terminal apparatus register, in advance, location information indicative of their locations, respectively,
wherein said server apparatus, using a communication method of forming a communication channel between the apparatuses using said location information, forms an encrypted communication channel using said encryption key between each of said first and second terminal apparatuses and said relay server by said second communication method.

5. A communication system according to claim 1, **characterized in that** at least one of said first terminal apparatus and said second terminal apparatus is a mobile portable terminal.

6. A communication system according to claim 1, **characterized in that** said first communication method is a communication method including at least a SIP (Session Initiation Protocol), and
said second communication method is a communication method including at least a combination of a SIP and an IPsec [IP (Internet Protocol) security protocol].

7. A communication system according to claim 1, **characterized in that** at least one of said first terminal apparatus and said second terminal apparatus is a terminal unadapted to said second communication method,
a gateway is included that performs conversion between said second communication method and a third communication method usable by said unadapted terminal, and
said gateway, on behalf of said unadapted terminal, forms a communication channel with another terminal by said second communication method.

8. A communication system according to claim 7, **characterized in that** said third communication method is a communication method using one of at least an HTTP (Hyper Text Transfer Protocol), short-range wireless communication, UWB (Ultra WideBand), and infrared communication.

9. A communication system enabling a data communication to be performed between a first and a second terminal apparatus based on an encryption key distributed to said first terminal apparatus and said second terminal apparatus from a key managing/distributing server, said communication system **characterized in that**
one of said first terminal apparatus and said second terminal apparatus notifies a trigger of start of said data communication to the other of said first terminal apparatus and said second terminal apparatus through said key managing/distributing server and through a communication channel by a first communication method, and
said first terminal apparatus and said second terminal apparatus, in response to transmission and reception of said trigger of start of said data communication, each form a communication channel by a second communication method between itself and said key managing/distributing server and each perform switching from the communication channel by said first communication method to the communication channel by said second communication method, whereby distributing said encryption key to said first terminal apparatus and said second terminal apparatus from said key managing/distributing server, respectively.

10. A communication system according to claim 9, **characterized in that** said data communication performed between said first and second terminal apparatuses is a peer-to-peer data communication.

11. A communication system according to claim 9, **characterized in that** said first terminal apparatus and said second terminal apparatus each register, in advance, location information indicative of its own location, and
said second communication method is a communication method that, using a communication method of forming a communication channel between the apparatuses using said location information, forms an encrypted communication channel using said encryption key between each of said first and second terminal apparatuses and said key managing/distributing server.

12. A communication system according to claim 9, **characterized by** including a server apparatus in which said first terminal apparatus and said second terminal apparatus register, in advance, location information indicative of their locations, respectively,
wherein said server apparatus, using a communication method of forming a communication channel between the apparatuses using said location information, forms an encrypted communication channel using said encryption key between each of said first and second terminal apparatuses and said key managing/distributing server by said second communication method.

13. A communication system according to claim 9, **characterized in that** said key managing/distributing server comprises means for instructing rewriting of a session destination address of the communication channel by said second communication method to each of said first terminal apparatus and said second terminal apparatus for forming a communication channel by said second communication method between said first terminal apparatus and said second terminal apparatus and means for performing, per said data communication, delivery of an encryption key for said rewriting of the session destination address.

14. A communication system according to claim 13, **characterized in that**, in response to the instruction for said rewriting of the session destination address from said key managing/distributing server and using the encryption key delivered from said key managing/distributing server, said first terminal apparatus and said second terminal apparatus form the communication channel by said second communication method therebetween.

15. A communication system according to claim 9, **characterized in that** said key managing/distributing server comprises means for instructing addition of a session through a communication channel by said second communication method between said first terminal apparatus and said second terminal apparatus to said first terminal apparatus and said second terminal apparatus for forming the communication channel by said second communication method between said first terminal apparatus and said second terminal apparatus and means for performing, per said data communication, delivery of an encryption key for said addition of the session.

16. A communication system according to claim 15, **characterized in that**, in response to the instruction for said addition of the session from said key managing/distributing server and using the encryption key delivered from said key managing/distributing server, said first terminal apparatus and said second terminal apparatus form the communication channel by said second communication method therebetween.

17. A communication system according to claim 9, **characterized in that** at least one of said first terminal apparatus and said second terminal apparatus is a mobile portable terminal.

18. A communication system according to claim 9, **characterized in that** said first communication method is a communication method including at least a SIP (Session Initiation Protocol), and
said second communication method is a communication method including at least a combination of a SIP and an IPsec [IP (Internet Protocol) security protocol].

19. A communication system according to claim 9, **characterized in that** at least one of said first terminal apparatus and said second terminal apparatus is a terminal unadapted to said second communication method,
a gateway is included that performs conversion between said second communication method and a third communication method usable by said unadapted terminal, and
said gateway, on behalf of said unadapted terminal, forms a communication channel with another terminal by said second communication method.

20. A communication system according to claim 19, **characterized in that** said third communication method is a communication method using one of at least an HTTP (Hyper Text Transfer Protocol), short-range wireless communication, UWB (Ultra WideBand), and infrared communication.

21. A key managing/distributing server adapted to distribute an encryption key to a first and a second terminal apparatus, respectively, in a communication system enabling a data communication between said first terminal apparatus and said second terminal apparatus, said key managing/distributing server **characterized by** comprising
means, responsive to receipt of a trigger of start of said data communication, transmitted from one of said first terminal apparatus and said second terminal apparatus, through a communication channel by a first communication method, for transferring said trigger of start of said data communication to the other of said first terminal apparatus and said second terminal apparatus, and means for distributing said encryption key through communication channels by a second communication method switched and formed by said first terminal apparatus and said second terminal apparatus between themselves and said key managing/distributing server, respectively, in response to transmission and reception of said trigger of start of said data communication.

22. A key managing/distributing server according to claim 21, **characterized in that** said data communication performed between said first and second terminal apparatuses is a peer-to-peer data communication.

23. A key managing/distributing server according to claim 21, **characterized in that** the communication channels by said second communication method are formed between said first and second terminal apparatuses and said key managing/distributing server, respectively, as encrypted communication channels using said encryption key, by the use of a communication method of forming a communication channel between the apparatuses using location information registered by said first terminal apparatus and said second terminal apparatus and indicative of locations of said first terminal apparatus and said second terminal apparatus, respectively.

24. A key managing/distributing server according to claim 21, **characterized in that** the communication channels by said second communication method are formed between said first and second terminal apparatuses and said key managing/distributing server, respectively, as encrypted communication channels using said encryption key, by a server apparatus in which said first terminal apparatus and said second terminal apparatus register, in advance, location information indicative of their locations, respectively, by the use of a communication method of forming a communication channel between the apparatuses using said location information.

25. A key managing/distributing server according to claim 21, **characterized by** comprising means for instructing rewriting of a session destination address of the communication channel by said second communication method to each of said first terminal apparatus and said second terminal apparatus for forming a communication channel by said second communication method between said first terminal apparatus and said second terminal apparatus and means for performing, per said data communication, delivery of an encryption key for said rewriting of the session destination address.

26. A key managing/distributing server according to claim 21, **characterized by** comprising means for instructing addition of a session through a communication channel by said second communication method to said first terminal apparatus and said second terminal apparatus for forming the communication channel by said second communication method between said first terminal apparatus and said second terminal apparatus and means for performing, per said data communication, delivery of an encryption key for said addition of the session.

27. A key managing/distributing server according to claim 21, **characterized in that** at least one of said first terminal apparatus and said second terminal apparatus is a mobile portable terminal.

28. A key managing/distributing server according to claim 21, **characterized in that** said first communication method is a communication method including at least a SIP (Session Initiation Protocol), and
said second communication method is a communication method including at least a combination of a SIP and an IPsec [IP (Internet Protocol) security protocol].

29. A key managing/distributing server according to claim 21, **characterized in that** at least one of said first terminal apparatus and said second terminal apparatus is a terminal unadapted to said second communication method, and
a gateway adapted to perform conversion between said second communication method and a third communication method usable by said unadapted terminal forms, on behalf of said unadapted terminal, a communication channel with another terminal by said second communication method.

30. A key managing/distributing server according to claim 29, **characterized in that** said third communication method is a communication method using one of at least an HTTP (Hyper Text Transfer Protocol), short-range wireless communication, UWB (Ultra WideBand), and infrared communication.

31. A terminal apparatus adapted to perform a data communication between itself and another terminal apparatus based on an encryption key shared by itself and said another terminal apparatus, said terminal apparatus **characterized by**
transmitting a trigger of start of said data communication to said another terminal apparatus through a relay server that relays said encryption key and through a communication channel by a first communication method, forming a communication channel by a second communication method between itself and said relay server in response to either of transmission of said trigger of start of said data communication from itself and reception of said trigger of start of said data communication from said another terminal apparatus, and performing switching from the communication channel by said first communication method to the communication channel by said second communication method, whereby performing either of transmission and reception of said encryption key through said relay server.

32. A terminal apparatus according to claim 31, **characterized in that** said data communication performed between itself and said another terminal apparatus is a peer-to-peer data communication.

33. A terminal apparatus according to claim 31, **characterized by** registering, in advance, location information indicative of its own location,
wherein said second communication method is a communication method that, using a communication method of forming a communication channel between the apparatuses using said location information, forms an encrypted communication channel using said encryption key between said terminal apparatus and said relay server.

34. A terminal apparatus according to claim 31, **characterized in that** a server apparatus in which said terminal apparatus registers, in advance, location information indicative of its own location forms, using a communication method of forming a communication channel between the apparatuses using said location information, an encrypted communication channel using said encryption key between said terminal apparatus and said relay server by said second communication method.

35. A terminal apparatus according to claim 31, **characterized in that** at least one of said terminal apparatus and said another terminal apparatus is a mobile portable terminal.

36. A terminal apparatus according to claim 31, **characterized in that** said first communication method is a communication method including at least a SIP (Session Initiation Protocol), and
said second communication method is a communication method including at least a combination of a SIP and an IPsec [IP (Internet Protocol) security protocol].

37. A terminal apparatus according to claim 31, **characterized in that** at least one of said terminal apparatus and said another terminal apparatus is a terminal unadapted to said second communication method, and
a gateway adapted to perform conversion between said second communication method and a third communication method usable by said unadapted terminal forms, on behalf of said unadapted terminal, a communication channel with another terminal by said second communication method.

38. A terminal apparatus according to claim 37, **characterized in that** said third communication method is a communication method using one of at least an HTTP (Hyper Text Transfer Protocol), short-range wireless communication, UWB (Ultra WideBand), and infrared communication.

39. A terminal apparatus adapted to perform a data communication between itself and another terminal apparatus based on an encryption key distributed to itself and said another terminal apparatus from a key managing/distributing server, said terminal apparatus **characterized by**
transmitting a trigger of start of said data communication to said another terminal apparatus through said key managing/distributing server and through a communication channel by a first communication method, forming a communication channel by a second communication method between itself and said key managing/distributing server in response to either of transmission of said trigger of start of said data communication from itself and reception of said trigger of start of said data communication from said another terminal apparatus, and performing switching from the communication channel by said first communication method to the communication channel by said second communication method, whereby receiving said encryption key from said key managing/distributing server.

40. A terminal apparatus according to claim 39, **characterized in that** said data communication performed between itself and said another terminal apparatus is a peer-to-peer data communication.

41. A terminal apparatus according to claim 39, **characterized by** registering, in advance, location information indicative of its own location,
wherein said second communication method is a communication method that, using a communication method of forming a communication channel between the apparatuses using said location information, forms an encrypted communication channel using said encryption key between said terminal apparatus and said key managing/distributing server.

42. A terminal apparatus according to claim 39, **characterized in that** a server apparatus in which said terminal apparatus registers, in advance, location information indicative of its own location forms, using a communication method of forming a communication channel between the apparatuses using said location information, an encrypted communication channel using said encryption key between said terminal apparatus and said key managing/distributing server by said second communication method.

43. A terminal apparatus according to claim 39, **characterized by** performing rewriting of a session destination address of the communication channel by said second communication method to said another terminal apparatus in response to an instruction from said key managing/distributing server and performing said rewriting of the session destination address using an encryption key delivered from said key managing/distributing server per said data communication.

44. A terminal apparatus according to claim 39, **characterized by** performing addition of a session through a communication channel by said second communication method between itself and said another terminal apparatus in response to an instruction from said key managing/distributing server and performing said addition of the session using an encryption key delivered from said key managing/distributing server per said data communication.

45. A terminal apparatus according to claim 39, **characterized in that** at least one of said terminal apparatus and said another terminal apparatus is a mobile portable terminal.

46. A terminal apparatus according to claim 39, **characterized in that** said first communication method is a communication method including at least a SIP (Session Initiation Protocol), and
said second communication method is a communication method including at least a combination of a SIP and an IPsec [IP (Internet Protocol) security protocol].

47. A terminal apparatus according to claim 39, **characterized in that** at least one of said terminal apparatus and said another terminal apparatus is a terminal unadapted to said second communication method, and
a gateway adapted to perform conversion between said second communication method and a third communication method usable by said unadapted terminal forms, on behalf of said unadapted terminal, a communication channel with another terminal by said second communication method.

48. A terminal apparatus according to claim 47, **characterized in that** said third communication method is a communication method using one of at least an HTTP (Hyper Text Transfer Protocol), short-range wireless communication, UWB (Ultra WideBand), and infrared communication.

49. A data communication method for use in a system enabling a data communication to be performed between a terminal apparatus and another terminal apparatus based on an encryption key shared by said terminal apparatus and said another terminal apparatus, said data communication method **characterized in that**
said terminal apparatus performs a step of transmitting a trigger of start of said data communication to said another terminal apparatus through a relay server that relays said encryption key and through a communication channel by a first communication method, and a step of forming a communication channel by a second communication method between itself and said relay server in response to either of transmission of said trigger of start of said data communication from itself and reception of said trigger of start of said data communication from said another terminal apparatus, and performing switching from the communication channel by said first communication method to the communication channel by said second communication method, whereby performing either of transmission and reception of said encryption key through said relay server.

50. A data communication method according to claim 49, **characterized in that** said data communication is a peer-to-peer data communication.

51. A data communication method according to claim 49, **characterized in that** said terminal apparatus and said another terminal apparatus each register, in advance, location information indicative of its own location, and
said second communication method is a communication method that, using a communication method of forming a communication channel between the apparatuses using said location information, forms an encrypted communication channel using said encryption key between each of said terminal apparatus and said another terminal apparatus and said relay server.

52. A data communication method according to claim 49, **characterized by** including a server apparatus in which said first terminal apparatus and said second terminal apparatus register, in advance, location information indicative of their locations, respectively,
wherein said server apparatus, using a communication method of forming a communication channel between the apparatuses using said location information, forms an encrypted communication channel using said encryption key between each of said first and second terminal apparatuses and said relay server by said second communication method.

53. A data communication method according to claim 49, **characterized in that** at least one of said first terminal apparatus and said second terminal apparatus is a mobile portable terminal.

54. A data communication method according to claim 49, **characterized in that** said first communication method is a communication method including at least a SIP (Session Initiation Protocol), and
said second communication method is a communication method including at least a combination of a SIP and an IPsec [IP (Internet Protocol) security protocol].

55. A data communication method according to claim 49, **characterized in that** at least one of said first terminal apparatus and said second terminal apparatus is a terminal unadapted to said second communication method,
a gateway is included that performs conversion between said second communication method and a third communication method usable by said unadapted terminal, and
said gateway, on behalf of said unadapted terminal, forms a communication channel with another terminal by said second communication method.

56. A data communication method according to claim 55, **characterized in that** said third communication method is a communication method using one of at least an HTTP (Hyper Text Transfer Protocol), short-range wireless communication, UWB (Ultra WideBand), and infrared communication.

57. A data communication method for use in a system enabling a data communication to be performed between a terminal apparatus and another terminal apparatus based on an encryption key distributed to said terminal apparatus and said another terminal apparatus from a key managing/distributing server, said data communication method **characterized in that**
said terminal apparatus performs a step of transmitting a trigger of start of said data communication to said another terminal apparatus through said key managing/distributing server and through a communication channel by a first communication method, and a step of forming a communication channel by a second communication method between itself and said key managing/distributing server in response to transmission/reception of said trigger of start of said data communication and performing switching from the communication channel by said first communication method to the communication channel by said second communication method, whereby receiving said encryption key from said key managing/distributing server.

58. A data communication method according to claim 57, **characterized in that** said data communication is a peer-to-peer data communication.

59. A data communication method according to claim 57, **characterized in that** said terminal apparatus and said another terminal apparatus each register, in advance, location information indicative of its own location, and
said second communication method is a communication method that, using a communication method of forming a communication channel between the apparatuses using said location information, forms an encrypted communication channel using said encryption key between each of said terminal apparatus and said another terminal apparatus and said key managing/distributing server.

60. A data communication method according to claim 57, **characterized by** including a server apparatus in which said terminal apparatus and said another terminal apparatus register, in advance, location information indicative of their locations, respectively,
wherein said server apparatus, using a communication method of forming a communication channel between the apparatuses using said location information, forms an encrypted communication channel using said encryption key between each of said terminal apparatus and said another terminal apparatus and said key managing/distributing server by said second communication method.

61. A data communication method according to claim 57, **characterized in that** said key managing/distributing server performs a step of instructing rewriting of a session destination address of the communication channel by said second communication method to each of said first terminal apparatus and said second terminal apparatus for forming a communication channel by said second communication method between said first terminal apparatus and said second terminal apparatus and a step of performing, per said data communication, delivery of an encryption key for said rewriting of the session destination address.

62. A data communication method according to claim 61, **characterized in that**, in response to the instruction for said rewriting of the session destination address from said key managing/distributing server and using the encryption key delivered from said key managing/distributing server, said terminal apparatus and said another terminal apparatus form the communication channel by said second communication method therebetween.

63. A data communication method according to claim 57, **characterized in that** said key managing/distributing server performs a step of instructing addition of a session through a communication channel by said second communication method between said first terminal apparatus and said second terminal apparatus to said first terminal apparatus and said second terminal apparatus for forming the communication channel by said second communication method between said first terminal apparatus and said second terminal apparatus and a step of performing, per said data communication, delivery of an encryption key for said addition of the session.

64. A data communication method according to claim 63, **characterized in that**, in response to the instruction for said addition of the session from said key managing/distributing server and using the encryption key delivered from said key managing/distributing server, said terminal apparatus and said another terminal apparatus form the communication channel by said second communication method therebetween.

65. A data communication method according to claim 57, **characterized in that** at least one of said terminal apparatus and said another terminal apparatus is a mobile portable terminal.

66. A data communication method according to claim 57, **characterized in that** said first communication method is a communication method including at least a SIP (Session Initiation Protocol), and
said second communication method is a communication method including at least a combination of a SIP and an IPsec [IP (Internet Protocol) security protocol].

67. A data communication method according to claim 57, **characterized in that** at least one of said terminal apparatus and said another terminal apparatus is a terminal unadapted to said second communication method,
a gateway is included that performs conversion between said second communication method and a third communication method usable by said unadapted terminal, and
said gateway, on behalf of said unadapted terminal, forms a communication channel with another terminal by said second communication method.

68. A data communication method according to claim 67, **characterized in that** said third communication method is a communication method using one of at least an HTTP (Hyper Text Transfer Protocol), short-range wireless communication, UWB (Ultra WideBand), and infrared communication.

69. A program of a data communication method for use in a system enabling a data communication to be performed between a terminal apparatus and another terminal apparatus based on an encryption key shared by said terminal apparatus and said another terminal apparatus, said program causing a computer of said terminal apparatus to execute
a step of transmitting a trigger of start of said data communication to said another terminal apparatus through a relay server that relays said encryption key and through a communication channel by a first communication method, and a step of forming a communication channel by a second communication method between itself and said relay server in response to either of transmission of said trigger of start of said data communication from itself and reception of said trigger of start of said data communication from said another terminal apparatus, and performing switching from the communication channel by said first communication method to the communication channel by said second communication method, whereby performing either of transmission and reception of said encryption key through said relay server,

70. A program according to claim 69, **characterized in that** said data communication is a peer-to-peer data communication.

71. A program of a data communication method for use in a system enabling a data communication to be performed between a terminal apparatus and another terminal apparatus based on an encryption key distributed to said terminal apparatus and said another terminal apparatus from a key managing/distributing server, said program causing a computer of said terminal apparatus to execute
a step of transmitting a trigger of start of said data communication to said another terminal apparatus through said key managing/distributing server and through a communication channel by a first communication method, and a step of forming a communication channel by a second communication method between itself and said key managing/distributing server in response to transmission/reception of said trigger of start of said data communication and performing switching from the communication channel by said first communication method to the communication channel by said second communication method, whereby receiving said encryption key from said key managing/distributing server.

72. A program according to claim 71, **characterized in that** said data communication is a peer-to-peer data communication.

73. An encrypted data communication method for performing an encrypted data communication between two nodes, said method **characterized by** comprising
a step of establishing an encrypted communication channel E1 between a relay server and a key managing/distributing server,
a step of establishing an encrypted communication channel E2 between a first node and said relay server and establishing an encrypted communication channel E3 between a second node and said relay server,
a step of performing a communication, for establishing an encrypted communication channel E4 between said first node and said key managing/distributing server, between said key managing/distributing server and said first node through said encrypted communication channels E1 and E2 and performing a communication, for establishing an encrypted communication channel E5 between said second node and said key managing/distributing server, between said key managing/distributing server and said second node through said encrypted communication channels E1 and E3,
a step of distributing an encryption key to both said first and second nodes from said key managing/distributing server through said established encrypted communication channels E4 and E5, and
a step of establishing an encrypted communication channel E6 between said first and second nodes using said encryption key.

74. A communication system comprising a relay server, a key managing/distributing server, and a first and a second node and enabling an encrypted data communication to be performed between said first and second nodes, said communication system **characterized in that**
said relay server and said key managing/distributing server respectively comprise means for establishing an encrypted communication channel E1 therebetween,
said first node and said relay server respectively comprise means for establishing an encrypted communication channel E2 therebetween,
said second node and said relay server respectively comprise means for establishing an encrypted communication channel E3 therebetween,
said first node and said key managing/distributing server respectively comprise means for establishing an encrypted communication channel E4 therebetween based on a communication performed through said encrypted communication channels E1 and E2,
said second node and said key managing/distributing server respectively comprise means for establishing an encrypted communication channel E5 therebetween based on a communication performed through said encrypted communication channels E1 and E3, and
said key managing/distributing server distributes an encryption key to said first and second nodes through said encrypted communication channels E4 and E5, respectively,
whereby establishing an encrypted communication channel E6 between said first and second nodes using said encryption key.

75. A computer program adapted to cause a computer to execute a step of distributing an encryption key, for establishing an encrypted communication channel, to nodes through a network, said computer program **characterized by** causing the computer to execute
a step 1 of establishing an encrypted communication channel E1 with respect to a relay server,
a step 2 of performing a communication, for establishing an encrypted communication channel E4 with respect to a first node, through said encrypted communication channel E1 and an encrypted communication channel E2 established in advance between said first node and said relay server,
a step 3 of establishing said encrypted communication channel E4 with respect to said first node based on a result of the communication in said step 2,
a step 4 of performing a communication, for establishing an encrypted communication channel E5 with respect to a second node, through said encrypted communication channel E1 and an encrypted communication channel E3 established in advance between said second node and said relay server,
a step 5 of establishing said encrypted communication channel E5 with respect to said second node based on a result of the communication in said step 4, and
a step 6 of distributing a common encryption key, for establishing an encrypted communication channel E6 between the two nodes, to said first and second nodes through said encrypted communication channels E4 and E5 established in said steps 4 and 5.
